**Europäisches Patentamt**

**European Patent Office**

**Office européen des brevets**

(19)

(11) Publication number : **0 389 879 B1**

## (12) EUROPEAN PATENT SPECIFICATION

(45) Date of publication of patent specification :
01.03.95 Bulletin 95/09

(51) Int. Cl.[6] : **G02F 1/35,** C07C 335/02,
C07D 213/89, C07F 3/06

(21) Application number : **90104941.1**

(22) Date of filing : **15.03.90**

(54) Semi-organic crystals for nonlinear optical devices.

(30) Priority : **29.03.89 US 330253**

(43) Date of publication of application :
**03.10.90 Bulletin 90/40**

(45) Publication of the grant of the patent :
**01.03.95 Bulletin 95/09**

(84) Designated Contracting States :
**DE FR GB**

(56) References cited :
**US-A- 4 818 898**
**ACTA CRYSTALLOGR., section B, vol. 24,**
**1968, pp. 683-680 ; G.D. ANDREETTI et al.:**
**"The Crystal and Molecular Structure of Tris**
**(thiourea) zinc (II) Sulphate"**

(56) References cited :
**MATER. RES. SOC. SYMP. PROC., vol. 173,**
**1990, pp. 557-561 ; P.R. NEWMAN et al.:**
**"Semiorganics : A New Class of NLO**
**Materials"**

(73) Proprietor : **ROCKWELL INTERNATIONAL**
**CORPORATION**
**2230 East Imperial Highway**
**El Segundo California 90245 (US)**

(72) Inventor : **Warren, Leslie F., Jr.**
**1902 La Ramada Drive**
**Camarillo, California 93010 (US)**

(74) Representative : **Wächtershäuser, Günter,**
**Prof. Dr. et al**
**Patentanwalt**
**Tal 29**
**D-80331 München (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

BACKGROUND OF THE INVENTION

This invention relates to the field of optics, and particularly to materials for use as the nonlinear element in nonlinear optical devices.

Recent advances in nonlinear optics (NLO) have created a new frontier for applied optics. This technology requires nonlinear optical materials. These are materials which have an index of refraction that varies with light intensity, or with applied electrical field, or (in the case of the photorefractive effect) materials which have a local index of refraction that is changed by the spatial variation of light intensity. These NLO materials can be used to construct optical devices which utilize the phenomena of optical phase conjugation and energy exchange between multiple beams.

Devices which have been conceived utilizing NLO materials include second harmonic generation phase-conjugate navigational devices and laser beam combining methods which employ optical phase conjugation, as well as methods for laser beam spatial (and spectral) mode cleanup, wavelength agile rejection filtering, laser radar receiving, image correlation and enhancement, and optical computing. These concepts rely on real-time holographic effects which can be induced in nonlinear materials. Although at preliminary stages, these concepts reveal the power of nonlinear optics in terms of performance breakthroughs in electro-optic device technology that a decade ago would have been thought impossible.

However, the manufacturability of nonlinear optical devices is limited by currently available NLO materials, which are primarily inorganic oxide crystals such as potassium niobate, potassium dihydrogen phosphate, lithium niobate, strontium barium niobate, and barium titanate. These inorganic oxide crystals have shortcomings due to difficulty of synthesis, lack of optical quality, and slow electro-optic response times.

Although there are many organic materials (for example, urea and 2-methyl-4-nitroaniline) which exhibit very high second harmonic generation responses in powder form, there are no practical device-quality organic NLO crystals. Typical organic crystals lack the mechanical robustness, dimensional and thermal properties, and optical quality required for fabricating optical devices.

A category of "semi-organic materials", or metal-organic coordination complexes, has been reported to show promise in the development of nonlinear optical materials (X. Guangcai et al, Bis-thiourea Cadmium Chloride (BTCC)--A Novel Nonlinear Optical Crystal of Organometallic Complex, Chinese Physics--Lasers, Vol. 14, No. 5, pp 357-363, May 1987). This category encompasses a very large number of semi-organic ionic crystals where relatively large, polarizable organic molecules are incorporated into a host inorganic ionic lattice.

Advance nonlinear optical (NLO) applications such as high speed optical phase conjugation, parametric amplification, and laser hardening require NLO crystals having high speed and high efficiency. Devices for these applications require new and improved NLO crystals in order to achieve their promised potential.

SUMMARY OF THE INVENTION

It is an object of the invention to provide a material for the nonlinear element in nonlinear optical devices.

It is an object of the invention to provide a nonlinear optical material which has a rapid response.

It is an object of the invention to provide a nonlinear optical material having a large nonlinear susceptibility.

It is an object of the invention to provide a nonlinear optical material having improved mechanical properties and a high light damage threshold.

According to the invention, a crystal of a complex salt containing a neutral nonlinear optical organic ligand coordinated to a metal ion is used as the nonlinear element in a nonlinear optical device, wherein the complex salt is either tris(thiourea)zinc sulfate or (4-nitropyridine-N-oxide)mercury(II) chloride.

These and other objects and features of the invention will be apparent from the following detailed description taken with reference to the accompanying drawing(s).

BRIEF DESCRIPTION OF THE DRAWINGS

Fig. 1 is a schematic of the system used to characterize NLO materials;

Fig. 2 is a plot of the transmission vs wavelength for a tris(thiourea)zinc sulfate crystal;

Fig. 3 is a plot of phase conjugate reflectivity vs pump beam energy density for tris(thiourea)zinc sulfate; and

Fig. 4 is a plot of the transmission vs wavelength for a (4-nitropyridine-N-oxide)mercury(II) chloride crystal.

## DESCRIPTION OF THE INVENTION

Organic materials offer the potential of relatively low-power laser-driven nonlinear optical (NLO) systems because of the magnitude of their optical nonlinearities and other optical properties such as optical response time, non-resonant susceptibility, second harmonic generation, and high phase-conjugate reflectivity. With the diversity of molecular structure and composition available through organic synthesis, there is an extremely high flexibility of material design with organic materials. Both NLO effects and processing properties can in principle be optimized through molecular engineering. Although detailed studies of prototype organics have been reported, specific overall molecular design criteria useful to chemists have not yet been developed. A primary impediment to molecular design is the inability to a priori predict the molecular orientation or crystal structure of a new compound. Such features are key to observing high nonlinear efficiencies. In addition, it is not possible to predict refractive index dispersion, birefringence, and the mechanical and chemical properties of materials from the knowledge of molecular structure.

Physical and chemical properties other than NLO properties can severely limit the utility of organic materials. For NLO applications, large optical quality crystals are desired (for example, large clear crystals about 4 mm on a side, with appropriate morphology, i.e., avoiding long thin needles). The crystals must form easily and be physically robust to facilitate good cutting and polishing and thereby reduce light diffusion and increase the threshold of surface damage. These properties will ultimately decide whether a NLO material is suitable for the fabrication of practical devices. Unfortunately, most organic compounds lack physical robustness, have low dimensional properties and poor three-dimensional bonding which leads to low crystal quality.

This invention combines advantages of organic materials with advantages of inorganic materials by utilizing semi-organic salt crystals. These semi-organic salts are in a general class of materials called coordination complexes, some of which can be polymeric in the solid state (via bridging ligand atoms and hydrogen bonding). In these crystals, organic ions are incorporated into an inorganic salt lattice and/or in a coordination complex salt. Typically, an inorganic counterion (for example, phosphate, sulfate, etc.) is used to provide the inorganic host lattice. Compared to conventional neutral organics, very large ionic single crystals can be relatively easily grown with appropriate selection of a counterion. It was hoped that such a marriage of organics and inorganics in ionic salts, in addition to providing the fast optical response times of some organic type materials, might also exhibit low frequency NLO responses by virtue of lattice distortions.

A large number of organic ions, organic ligands, and metal salts were considered as possible constituents of a NLO semi-organic salt crystal. In the initial material screening, several inorganic counterions (halide, sulfate, phosphate, nitrate, etc.) were tested with each organic or complex ion to determine the symmetry and optical quality of crystals which could be obtained. Crystallization took place from aqueous and nonaqueous solutions by slow evaporation at room temperature. Most organic materials, including semi-organics, do not form crystals suitable for optical applications. Nevertheless, several hundred semi-organic systems were screened in this way. Only one in twenty to thirty of the semi-organic compounds examined produced crystals having promising morphology, and these are tabulated below. The Type 1 semiorganics are salts containing an NLO organic ion and an inorganic counterion. The Type 2 semiorganics are complex salts containing a neutral NLO organic ligand coordinated to a metal ion.

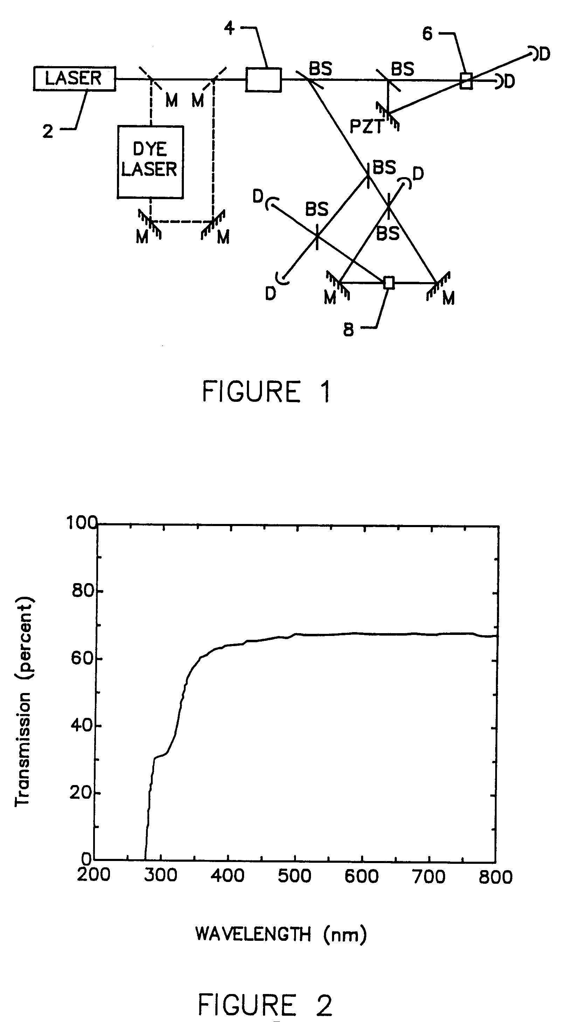

Fig. 1 is a schematic drawing of a two- and four-wave mixing setup used to determine the NLO properties of the experimental semi-organics shown in the Table. Laser 2 is a pulsed doubled ND:YAG ($0.53\mu$m), 8ns pulse. The mirrors are identified as "M", the beam splitters by "BS", and the detectors by "D". Box 4 is a faraday isolator and reference number 6 is a photorefractive crystal in the two-wave mixing portion of the setup. Nonlinear optic sample 8 is positioned in a temperature controlled sample holder in the four-wave mixing portion of the setup. If a phase conjugate reflectivity was observed prior to crystal degradation, it was noted as an $\chi^{(3)}$ in the properties column in the Table.

Table

Properties of Semi-Organic NLO Crystals

| Organic | Type 1 Semiorganic | Properties |
|---|---|---|
| L-arginine | LAP | No $\chi^{(3)}$ response |
| Triphenylmethylphosphonium ion (TPMP) | (TPMP) $HgBr_3$ | Damage at 2.9 J/cm² |
| Tetraphenylarsonium | (TPA) $HgCl_3$ | Damage at 1.3 J/cm² |
| Tetraethylammonium ion (TEA) | (TEA) $HgCl_3$ | Damage at 6 J/cm² |
| 4-Aminopyridinium ion (4-AP) | $(4\text{-}AP)_2\ Zn(SO_4)_2$ | Stable > 10 J/cm² |
| 4-Aminopyridinium ion (4-AP) | (4-AP) $H_2PO_4$ | Not measured |
| Bis(triphenylphosphine)iminium ion (BTPPI) | (BTPPI) $HgCl_3$ | Not measured |
| 5-nitrobenzimidazolium ion (5-NBI) | $(5\text{-}NBI)_2\ SO_4$ | Not measured |
| Trimethylsulfoxonium ion (TMSO) | (TMSO) $HgI_3$ | Not measured |
| _Type 2 Semiorganic_ | | |
| Thiourea (TU) | $Zn(TU)_3\ SO_4$ | $\chi^{(3)}$ response, damage at 18.5 J/cm² |
| Thiourea (TU) | $Cu(TU)_3\ Cl$ | Low damage threshold |
| Triphenylphosphine oxide (TPPO) | $Cd(TPPO)_2\ I_2$ | Damage at 1.4 J/cm² |
| Triphenylphosphine sulfide (TPPS) | $Cd(TPPS)_2\ I_2$ | Low damage threshold |
| 4-nitropyridine-N-oxide (NPO) | (NPO)$HgCl_2$ | $\chi^{(3)}$ response, damage at 9.7 J/cm² |

The laser damage threshold data in the Table strongly suggests that metal complexes with soft donors (S and Cl) and with soft acceptors ($Cd^{2+}$, $Hg^{2+}$, and $Cu^+$) will not be stable to the intense irradiation required to observe $\chi^{(3)}$ phenomena (Note: the term "soft" denotes a highly polarizable, covalently bonding atom; "hard" indicates a low polarizability, more ionic bonding atom). This feature is due to the high thermodynamic stability of the uncomplexed metal halides and chalcogenides which readily form thermally from these covalently bonded systems. On the other hand, more ionic soft donor-hard acceptor complexes (as in the zinc-thiourea system) and hard donor-hard acceptor complexes (as in the 4-AP zinc sulfate double salt) appear to have very high laser damage thresholds. The soft acceptor system, (NPO)$HgCl_2$, containing both hard and soft donors, exhibited a substantial phase conjugate reflectivity. These features of the Type 2 semiorganics must be taken into account during formulation of new $\chi^{(3)}$ systems.

Of all the semi-organic materials evaluated and tested, the two which show the most promise and which form the basis for this invention are the Type 2 semi-organic materials identified in the Table as $Zn(TU)_3SO_4$, and (NPO)$HgCl_2$. The phase conjugate reflectivities observed for these two materials imply $\chi^{(3)}$ values comparable or of greater magnitude than the highly conjugated organic polymer materials, e.g. the polydiacetylenes. In addition, the absorption loss is considerably lower in these semiorganic crystals. Examples 1 and 2 below further describe these two NLO materials.

EXAMPLE 1 $Zn(TU)_3SO_4$

Tris(thiourea)zinc sulfate was found to deposit from water (by room temperature evaporation) as large, nearly colorless, optically clear crystals. They are non-hygroscopic, tough and easily polished, and transparent from about 0.35um. From an early single crystal x-ray diffraction study (Andreetti et al, Acta. Cryst. B24, 683, 1968), the zinc atom was shown to tetrahedrally coordinate three TU molecules through sulfur and one sulfate ion through oxygen; the molecules in the crystal are linked together by an extensive hydrogen bonding network. The non-centrosymmetric orthorhombic $Pca2_1$ space group gives rise to a biaxial crystal system, but which behaves nearly uniaxially.

Preliminary second harmonic generation (SHG) results with a pulsed YAG laser (1.06 to 0.53 um) showed a response approximately four times that of potassium dihydrogen phosphate (KDP). In the degenerate four wave mixing (DFWM) experiment with a pulsed doubled ND:YAG laser (0.53 microns), a crystal produced a stable phase conjugate reflectivity of about 0.015% at a power of 17 J/cm$^2$; the observed damage threshold of the material at this wavelength was about 18.5 J/cm$^2$. The $\chi^{(3)}$ response was at least as fast as the pulse, 8 ns.

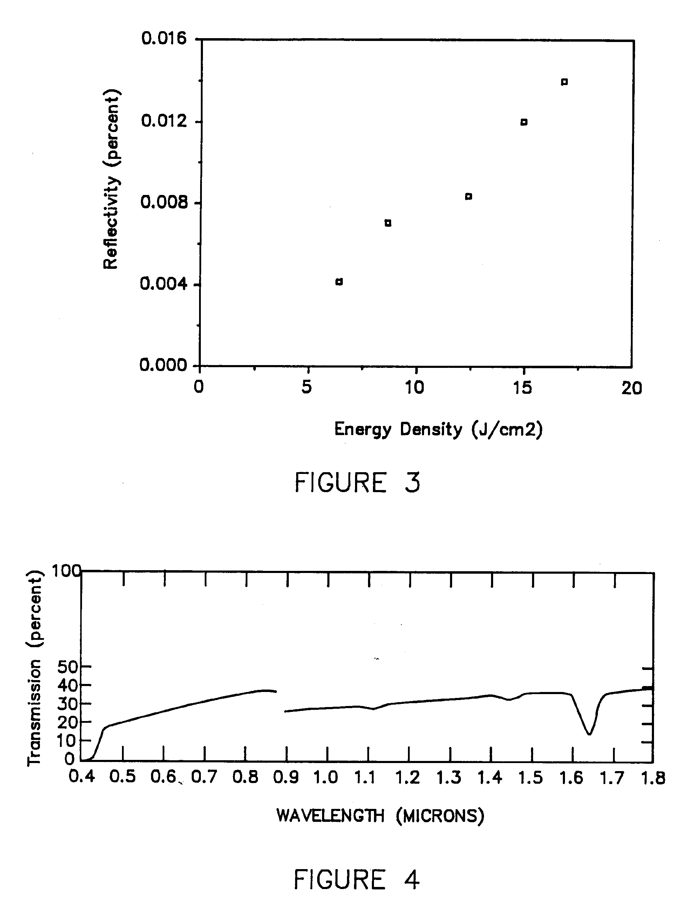

The transmission of this material is shown in Fig. 2. Its phase conjugate reflectivity based upon four-wave mixing experiments is shown in Fig. 3.

EXAMPLE 2 $(NPO)HgCl_2$

(4-Nitropyridine-N-oxide)mercury(II) chloride forms large, very strongly birefringent, optically clear yellow crystals from an acetone/toluene solvent mixture. Softer than the zinc-thiourea crystals, these can be polished with care and have a transparency range from about 0.45 to 1.65 microns. While the crystal structure has not yet been determined, the molecular arrangement may be polymeric (via bridging ligands) as in the related pyridine-N-oxide analog. Unoptimized DFWM measurements (pulsed doubled ND: YAG) produced a phase conjugate reflectivity estimated at about 0.12% at 9 J/cm$^2$; laser damage occurred in the crystal at about 10 J/cm$^2$. This response was at least as rapid as the 8 ns pulse of the laser.

The preferred embodiments of this invention have been illustrated by the examples described above. Modifications and additional embodiments, however, will undoubtedly be apparent to those skilled in the art. Furthermore, equivalent elements may be substituted for those illustrated and described herein. For example, variations of the two crystals could include the deuterated analogs (the hydrogen atoms, H, substituted with deuterium atoms, D), which could extend the useful wavelength range of the materials further into the infrared. Consequently, the exemplary embodiments should be considered illustrative, rather than inclusive, while the appended claims are more indicative of the full scope of the invention.

## Claims

1. The use as the nonlinear element in a nonlinear optical device of a crystal of a complex salt containing a neutral nonlinear optical organic ligand coordinated to a metal ion, said complex salt being selected from the group consisting of tris(thiourea)zinc sulfate and (4-nitropyridine-N-oxide)mercury(II) chloride.

2. The use of a crystal of tris(thiourea)zinc sulfate as the nonlinear element in a nonlinear optical device.

3. The use of a crystal of (4-nitropyridine-N-oxide)mercury(II) chloride as the nonlinear element in a nonlinear optical device.

## Patentansprüche

1. Verwendung eines Kristalls aus einem Komplexsalz, das einen neutralen, koordinativ an ein Metallion gebundendenen nichtlinearen optischen organischen Liganden enthält, als das nichtlineare Element in einer nichtlinearen optischen Vorrichtung, wobei das Komplexsalz ausgewählt ist aus der Gruppe, die aus Tris(thioharnstoff)zinksulfat und (4-Nitropyridin-N-oxid)quecksilber(II)chlorid besteht.

2. Verwendung eines Kristalls aus Tris(thioharnstoff)zinksulfat als das nichtlineare Element in einer nichtlinearen optischen Vorrichtung.

3. Verwendung eines Kristalls aus (4-Nitropyridin-N-oxid)quecksilber(II)chlorid als das nichtlineare Element in einer nichtlinearen optischen Vorrichtung.

**Revendications**

1. Utilisation, en tant qu'élément non linéaire dans un dispositif optique non linéaire, d'un cristal d'un sel complexe comprenant un ligand organique optique non linéaire neutre coordonné à un ion métallique, ce sel complexe étant choisi dans le groupe constitué par le sulfate de tris(thiourée)zinc et le chlorure de (4-nitropyridine-N-oxyde)mercure(II).

2. Utilisation d'un cristal de sulfate de tris-(thiourée)zinc en tant qu'élément non linéaire dans un dispositif optique non linéaire.

3. Utilisation d'un cristal de chlorure de (4-nitropyridine-N-oxyde)mercure(II) en tant qu'élément non linéaire dans un dispositif optique non linéaire.

FIGURE 1

WAVELENGTH (nm)

FIGURE 2

FIGURE 3

FIGURE 4